(19) Europäisches Patentamt
European Patent Office
Office européen des brevets

(11) **EP 2 048 656 B1**

(12) **EUROPEAN PATENT SPECIFICATION**

(45) Date of publication and mention
of the grant of the patent:
**10.02.2010 Bulletin 2010/06**

(51) Int Cl.:
*G10L 17/00* (2006.01)      *G10L 15/06* (2006.01)

(21) Application number: **07019849.4**

(22) Date of filing: **10.10.2007**

(54) **Speaker recognition**

Sprechererkennung

Reconnaissance du locuteur

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**15.04.2009 Bulletin 2009/16**

(73) Proprietor: **Harman Becker Automotive Systems
GmbH**
**76307 Karlsbad (DE)**

(72) Inventors:
• **Gerl, Franz**
**89233 Neu-Ulm (DE)**
• **Herbig, Tobias**
**89075 Ulm (DE)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 022 725      WO-A-02/090915**

• **KWON S ET AL: "Unsupervised Speaker Indexing
Using Generic Models" IEEE TRANSACTIONS
ON SPEECH AND AUDIO PROCESSING, IEEE
SERVICE CENTER, NEW YORK, NY, US, vol. 13,
no. 5, September 2005 (2005-09), pages
1004-1013, XP011137547 ISSN: 1063-6676**
• **HANSEN J H L ET AL: "Rapid Discriminative
Acoustic Model Based on Eigenspace Mapping
for Fast Speaker Adaptation" IEEE
TRANSACTIONS ON SPEECH AND AUDIO
PROCESSING, IEEE SERVICE CENTER, NEW
YORK, NY, US, vol. 13, no. 4, July 2005 (2005-07),
pages 554-564, XP011134937 ISSN: 1063-6676**

**Description**

The invention is directed to a method and an apparatus for speaker recognition based on a received speech input, and to a method and apparatus for recognizing a received speech input.

Speaker recognition is used in many different technical fields. In principle, two different types of speaker recognition may be distinguished: on the one hand, speaker verification and, on the other hand, speaker identification. Speaker recognition in the form of speaker verification, for example, is used to confirm or reject an identity claimed by a speaker. This may be useful for example, in the case of access control utilizing speech as biometrical feature.

In case of speaker recognition in the form of speaker identification, based on a speech sample, a speaker is selected from a set of known speakers for which speech samples have been provided in advance. In this case, as a further option, the speaker identification system may also be enabled to decide that a new speech sample does not match any of the existing speech samples, in other words, that the new speech sample corresponds to an unknown speaker.

Prior art speaker recognition systems as mentioned above, however have the drawback that an extensive training has to be performed in advance in order to obtain the necessary speech samples and/or speaker models. For different applications such as speech recognition, distinguishing between different speakers might provide useful but providing any prior training is undesirable.

WO 02/090915 discloses background learning of speaker voices. A speaker generator records training utterances from a plurality of speakers in the background and, then performs a blind clustering of the training utterances. A speaker identifier identifies a speaker determining a most likely one of the speaker models for an utterance received from the speaker. However, also in this case, a training phase is required although being performed in the background.

Kwon S et al : "Unsupervised Speaker Indexing Using Generic Models", IEEE Trans. on Speech and Audio Proc., vol. 13, no. 5, Sept. 2005, pages 1004-1013, discloses speaker recognition comprising speaker change detection.

In view of the above, it is an object to provide a method and an apparatus for speaker recognition which is both reliable and can be utilized in a straight-forward way. This problem is solved by the method according to claim 1 and the apparatus according to claim 16.

Accordingly, as set forth in claim 1, a method for automatic speaker recognition based on a received speech input is provided, wherein a speaker model set comprising at least a speaker-independent speaker model is provided, the method comprising the steps:

detecting whether the received speech input matches a speaker model of the speaker model set according to a predetermined criterion; and

if no match is detected, creating a speaker model for the speaker model set based on the received speech input,

wherein the detecting step comprises performing a speaker change recognition to obtain a measure for a speaker change, and wherein the predetermined criterion is based on the speaker change measure.

The created speaker model may be a speaker-dependent model. Originally, i.e. when being used for the first time, the speaker model set may contain only one or more speaker-independent speaker models. In other words, the method starts with at least one speaker-independent model only. After some time, the speaker model set will also comprise additional, speaker-dependent speaker models. Particularly due to the use of a speaker-independent speaker model as a basis for speaker recognition, this method may be employed directly without prior training phase. Furthermore, as speaker models are created for unknown speakers, these speaker models being speaker-dependent, a distinction between different speakers is enabled.

The predetermined criterion may be provided in different forms and may be based on additional variables or parameters. The predetermined criterion may be set once and kept fixed during performance of the method. Alternatively, the predetermined criterion may be adaptive; for example, different parameters of the criterion may be changed during performance of the method. As an example, the predetermined criterions may be provided in form of a neural network.

The measure for a speaker change is an indication about the probability or the likelihood that a speaker change has occurred. In particular, the measure for a speaker change may be a probability function, for example, a conditional probability function. Such a speaker change measure is a suitable parameter for the predetermined criterion.

Additionally, a speaker change recognition may be performed to obtain a measure for no speaker change. Then, the predetermined criterion may additionally be based on the no speaker change measure.

The speaker change recognition may be configured to obtain a measure for a speaker change within the received speech input (or utterance) and/or from a preceding speech input to the received speech input. In the case of short utterances or speech inputs (e.g., shorter than 3 seconds), obtaining a measure for a speaker change of the received speech input compared to a preceding speech input (that has been buffered or stored) is particularly suitable.

The method may comprise determining two consecutive speech segments and performing the speaker change recognition with respect to the speech segments. The speech segments may both be part of the received speech input; alternatively, the received speech input may be considered as one speech segment and a preceding speech input as another speech segment.

The method may further comprise storing or buffering a received speech input. This allows for an efficient determination of a speaker change between two consecutive speech inputs.

According to a further aspect, the detecting step may additionally comprise determining a measure for a speaker identification with respect to a speaker model in the speaker model set, and the predetermined criterion may additionally be based on the speaker identification measure.

The speaker identification measure is a measure or an indication of how well the received speech input matches a speaker model in the speaker model set. In other words, it is an indication about the probability or the likelihood that a received speech input matches a speaker model. In particular, the speaker identification measure may be a probability function, for example, a conditional probability function.

The detecting step may additionally comprise determining a measure for a speaker identification with respect to each speaker model in the speaker model set, and the predetermined criterion may additionally be based on all speaker identification measures. In this way, the speaker identification constitutes another suitable parameter for the predetermined criterion.

In principle, different forms are possible for the speaker models. In particular, Support Vector Machines (SVM), Hidden Markov Models (HMM), Neural Networks (NN) or Radial Basis Functions (RBF) may be used. Alternatively, a speaker model may be a Gaussian mixture model, particularly, with diagonal covariance matrices.

The predetermined criterion may be based on a speaker change measure and on a speaker identification measure. The steps of determining a speaker change measure and of determining a speaker identification measure may, but need not be based on the same speaker model. According to one aspect, both determination steps may be based on speaker models in form of Gaussian mixture models.

The detecting step may be based on a Maximum A Posteriori (MAP) estimation. In particular, performing the speaker change recognition may comprise performing a Maximum A Posteriori estimation. In principle, other methods such as a Maximum Likelihood method or an Expectation Maximization (EM) method may be used.

Performing the speaker change recognition may comprise adapting the speaker-independent model to each of two consecutive speech segments and to a unification of the two consecutive speech segments. At least one of the speech segments may be part of the received speech input. In particular, both speech segments may be part of the received speech input; alternatively, one of the speech segments may correspond to the received speech input and the other speech segment may be part of or correspond to a preceding speech input. As an example, a Maximum A Posteriori method may be used for the adapting step.

The detecting step may comprise determining a likelihood function. In particular, a speaker change measure and a speaker identification measure may be determined in the form of a likelihood function.

For example, determining a speaker change recognition may comprise determining a likelihood function or a likelihood for a speaker change and for no speaker change. Then, the predetermined criterion may be based on the determined likelihood for a speaker change and for no speaker change. In particular, the predetermined criterion may be based on the difference of the likelihood for a speaker change and the likelihood for no speaker change.

The detecting step may be based on a Bayesian Information Criterion (BIC). In particular, the step of performing a speaker change recognition may be based on a Bayesian Information Criterion. This allows to determine in an effective way whether a speaker change has occurred (within a received speech input or when compared to a preceding speech input).

Determining a measure for a speaker identification may comprise determining a likelihood function or a likelihood for the received speech input corresponding to a speaker model in the speaker model set. In particular, determining a likelihood for the received speech input corresponding to each speaker model in the speaker model set or to each created speaker model in the speaker model set may be performed. Then, the predetermined criterion may additionally be based on the one or more determined likelihood functions for the received speech inputs.

The detecting step may further comprise comparing the likelihood functions for the received speech input with a predetermined threshold. Alternatively or in addition, the detecting step may comprise comparing one or more differences of likelihood functions with a predetermined threshold. In this case, if a likelihood function or a difference is below the predetermined threshold, it may be determined that the speech input does not match the corresponding speaker model. If no match with any of the speaker models is determined, it is determined that the speech input corresponds to an unknown speaker. This results in creating a speaker model.

The speaker-independent model may be a Universal Background Model (UBM). The UBM may have been in trained on a plurality of speakers and/or a plurality of utterances using k-means or an EM algorithm. Such a speaker-independent model is particularly suitable for subsequent speaker recognition and creation of speaker models.

The detecting step may comprise performing feature extraction on the received speech input. Performing feature extraction may comprise determining a feature vector, pitch and/or signal-to-noise ratio. The detecting step may comprise receiving non-speech information. Such non-speech information, for example, stemming from interacting applications or technical devices, may also be taken into account. It may further comprise segmenting a received speech input and/or a preceding speech input. In this way, speech pauses may be removed. Thus, reliability of the detecting step is increased.

The creating step may comprise adapting a speaker-independent speaker model to create the speaker model. Particularly in this case, the adapting step may comprise performing a Maximum A Posteriori (MAP) method. In this way, a speaker-independent speaker model provided beforehand serves as a basis for creating a speaker-dependent speaker model. The creating step may comprise adapting the speaker-independent speaker model to create a group of speaker-independent models. Such speaker-independent models may be adapted to a specific type or class of speaker (such as male and female).

The previously described methods may comprise adapting a speaker model in the speaker model set if a match is detected. This allows to modify an existing speaker model to yield a better representation of a speaker corresponding to the received speech input. In this case, no new speaker model is created but an already existing (speaker-dependent) speaker model is replaced with an updated speaker model, namely the adapted model. The adapting step may use the speech input assigned to a speaker model according to the speaker change measure and the speaker identification measure. If a match is uncertain according to the predetermined criterion, the creating step may comprise delaying the adaptation step, in particular, until further information is available.

The method may comprise comparing a speaker model in the speaker model set before and after the adapting step according to a predetermined criterion. This comparing step may comprise determining a distance of the speaker model before and after the adapting step. For example, a Kullback-Leibler entropy may be determined. Alternatively, a cross-correlation may be determined. In this way, a further parameter which may be used by the predetermined criterion to determine whether a match is present is provided.

The above-described methods may comprise determining whether two speaker models in the speaker model set correspond to a same speaker according to a predetermined criterion. In this case, the predetermined criterion may additionally be based on a distance measure, such as a Kullback-Leibler entropy or a cross-correlation of the two speaker models. In particular, the method may comprise fusing or combining two speaker models of the speaker model set.

The methods, particularly the detecting step may additionally comprise determining a distance between two speaker models. For example, a Kullback-Leibler entropy may be determined. This allows to determine, for example, whether two speaker models are to be fused (e.g. because of corresponding to the same speaker).

In the above-described methods, the detecting step may be supported by a background noise model. By also using a background noise model, the reliability of the method may be increased and a match of a received speech input with respect to the background noise may be detected as well.

In the previously described methods, the maximum number of speaker models in the speaker model set may be limited. In this way, the efficiency and reliability of the method may be increased. For example, if no match is detected in the detecting step and if the maximum number of speaker models in the speaker model set is reached, the method may comprise removing a speaker model from the speaker model set according to a predetermined criterion. This predetermined criterion may be based on the time the speaker models in the speaker model set have been modified or adapted last and/or on a quality measure of the adapted speaker model, in particular, which may depend on an amount of speech material that was used for adaptation.

The above-described methods have the advantage, that, due to the use of a speaker change measure and additional parameters in a criterion to recognize a speaker, this task can be accomplished even in the case of short utterances (shorter than 3 seconds) with high reliability. In view of the different parameters (such as speaker change likelihood and speaker identification likelihood) entering the predetermined criterion, thus avoiding use of a strict threshold detection, reliability of the results may be increased.

In the previously described methods, the speaker model set may comprise more than one speaker-independent speaker model. In this way, suitable speaker-independent models for a specific type or class of speakers (such as female and male speakers) may be provided.

The invention also provides a method for automatically recognizing a received speech input comprising:

performing the steps of one of the previously described methods for speaker recognition; and

performing speech recognition based on the recognized speaker.

In this way, speech recognition can be further improved. For example, different speech models and/or vocabularies may be provided, trained and/or adapted for different speakers during use of the speech recognition method. For example, in the case of speech control of devices and/or a telephone hands-free system in a vehicular cabin, the number of potential users is often limited, thus allowing to perform the above methods in which speaker models are created in real time in an advantageous way. Furthermore, as speech control in many cases consists of short utterances, an increased recognition reliability is desirable.

The invention also provides a computer program product comprising at least one computer-readable medium having computer-executable instructions for performing the steps of one of the previously described methods.

The invention also provides, as set forth in claim 16, an apparatus for automatic speaker recognition based on a received speech input, wherein a speaker model set comprising at least a speaker-independent speaker model is provided, comprising:

a detecting component for detecting whether the received speech input matches the speaker model of the speaker model set according to a predetermined criterion; and

a creating component for creating a speaker model for the speaker model set based on the received speech input if no match is detected,

wherein the detecting component comprises a speaker change recognition component for performing a speaker changer recognition to obtain a measure for a speaker change, and wherein the predetermined criterion is based on the speaker change measure.

The apparatus may comprise a storing component for storing a created speaker model.

According to another aspect, the detecting component may additionally comprise a control component. This control component may be configured to control the detecting step based on received input data. In particular, the control component may be configured to control the detecting step based on the predetermined criterion. The received input data may be, for example, a speaker change measure and a speaker identification measure. As an example, the control component may comprise a neural network.

According to a further aspect, the detecting component may additionally comprise a speaker identification component for determining a measure for a speaker identification with respect to a speaker model in the speaker model set, and the predetermined criterion may additionally be based on the speaker identification measure.

The invention also provides, as set forth in claim 19, a system for automatically recognizing a received speech input, comprising an apparatus for speaker recognition as described above; and a speech recognition apparatus for performing speech recognition based on the identified speaker.

Further features and advantages will be described in the following with regard to the exemplary figures and embodiments.

Fig. 1  illustrates schematically the structure of an example of an apparatus for speaker recognition;

Fig. 2  illustrates a flow diagram of an example of a method for speaker recognition; and

Fig. 3  illustrates schematically a MAP method.

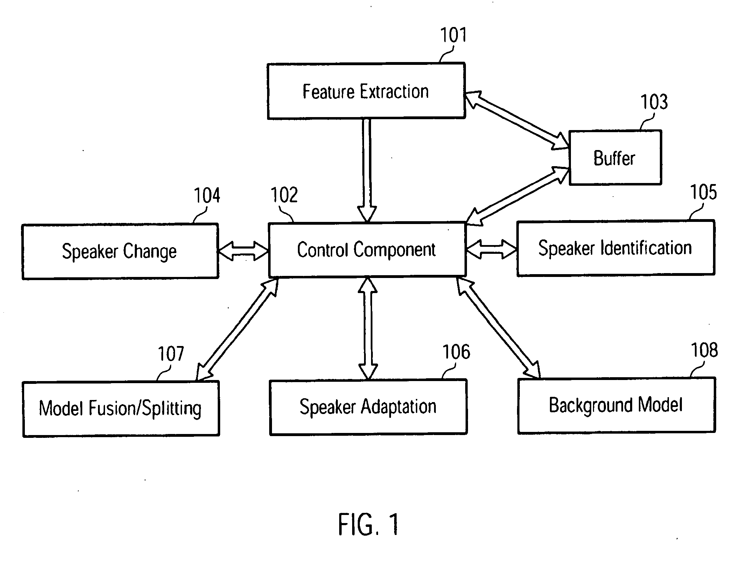

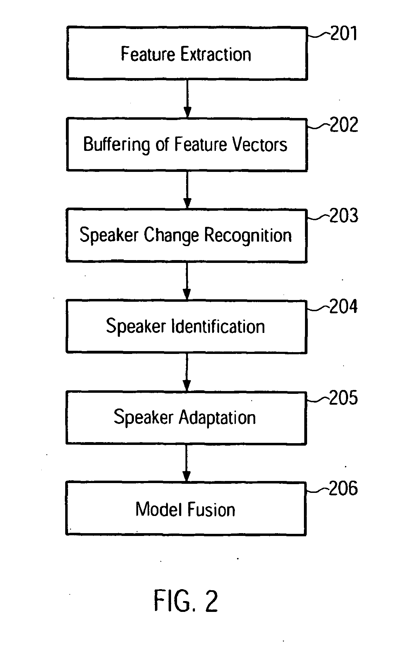

In Fig. 1; the structure of an example of an apparatus for speaker recognition is illustrated. It is to be understood that not all components illustrated in this figure must be present or implemented in order to perform the invention. A flow diagram illustrating a method for speaker recognition which may be performed by an apparatus as illustrated in Fig. 1 is shown in Fig. 2. In the following, the different components and steps of the apparatus and method, respectively, will be outlined.

The apparatus as illustrated in Fig: 1 may be implemented in a speech recognition system being present in a vehicular cabin, for example, allowing different users to control devices via speech input. For this purpose, a microphone or a microphone array with a beamformer are provided. Speech input received in this way will be used to perform the method for speaker and speech recognition. In order to determine whether an audio input comprises a (wanted) speech component, a speech activity detector may be provided controlling activity of the speech and speaker recognition method.

In principle, the speech input may be any type of utterance by one or more users. However, the present invention is particularly useful in case of short utterances such as having a length of less than 3 seconds.

In a first step, a received speech input or utterance is subjected to a feature extraction step 201. This step is performed in feature extraction component 101. Such a feature extraction may be performed in different ways as known in the art, see for example L. Rabiner et al., "Fundamentals of Speech Recognition", Prentice Hall, 1993.

As a result of this feature extraction step, feature vectors for the received speech input and possibly additional information such as pitch or signal-to-noise ratio are obtained and passed to control component 102 for further processing.

Feature vectors of a received speech input may also be buffered in buffer 103 to be used by other component during subsequent processing. The number of speech inputs or utterances for which speech vectors are buffered may be limited because of computational load requirements or privacy protection. For example, only the last five utterances are buffered. The buffered feature vectors are used to collect enough utterances for reliable detections, for example, for speaker change recognition for which particularly one or more directly preceding utterances are employed.

Additionally, utterances being buffered may be restricted to consecutive utterances stemming from a same speaker only.

In the next step 203, speaker change recognition is performed in speaker change recognition component 104. In this step, in principle, a speaker change within a speech input or from a preceding speech input to the current speech input may be detected. However, particularly in the case of speech control, the utterances generally are very short so that the system may assume that each utterance stems from a single speaker. In other words, speaker change recognition will be performed by comparing a current input and one or more preceding utterances have being buffered in buffer 103. Thus, the current received speech input is considered as a speech segment, and a buffered preceding speech input is considered as another speech segment.

For this speaker change recognition step, in principle, different methods are possible such as using a multivariable Gauss Distribution with diagonal covariance matrix (see J. Ajmera et al., "Robust Speaker Change Detection", IEEE Signal Processing Letters, Vol. 11, No. 8, 2004), using an arithmetic harmonic sphericity measure (see F. Bimbot et al., "Text-Free Speaker Recognition Using An Arithmetic-Harmonic Sphericity Measure", 3rd European Conference on Speech and Technology 1993) or support vector machines (see V. Kartik et al, "Speaker Change Detection Using Support Vector Machines", NOLISP 2005.

According to an advantageous embodiment, Gaussian mixture models (GMM) are used. As a starting point for this (and also other steps of the method), a speech independent Gaussian mixture model, a so called universal background model (UBM) is provided beforehand which had been trained using a plurality of speakers and/or a plurality of utterances by a k-means or an expectation maximization algorithm (for GMM training see, for example, D. Reynolds et al., "Robust Text-Independent Speaker Identification Using Gaussian Mixture Speaker Models", IEEE Transactions on Speech and Audio Processing, Vol. 3; No: 1, 1995). This universal background model may be stored, for example, in a separate storage unit which is accessible by the different components of the apparatus illustrated in Fig. 1.

In general, a GMM comprises $M$ Clusters, each consisting of a Gauss distribution $N = \{\mathbf{x} \,|\mu_i, \Sigma_i\}$ having a mean $\mu$ and a covariance matrix $\Sigma$. The feature vectors $\mathbf{x}_t$ with time index $t$ may be assumed to be statistically independent. The utterance is represented by a segment $\mathbf{X} = \{\mathbf{x}_1,..., \mathbf{x}_M\}$ of length $M$. The probability density of the GMM is the result of a combination or superposition of all clusters with a priori probability $p(i) = w_i$ . $i$ is the cluster index and $\lambda = \{w_1,...,w_M, \mu_1,...,\mu_M, \Sigma_1,...,\Sigma_M\}$ represents the parameter set of the GMM.

The a posteriori probabilities are given by

$$p\left(\mathbf{x}|\lambda\right) = \sum_{i=1}^{M} w_i \cdot N\{\mathbf{x}|\mu_i, \Sigma_i\}$$

$$\sum_{i=1}^{M} w_i = 1$$

The preceding utterance or utterances as buffered in buffer 103 are represented by segment $\mathbf{Y} = \{\mathbf{Y}_1,...,\mathbf{Y}_P\}$ of length $P$. This segment, depending on how many preceding utterances have been buffered, may correspond to a unification of a plurality of preceding utterances.

In addition to this, a unified segment $\mathbf{Z} = \{\mathbf{X},\mathbf{Y}\}$ with length $S = M + P$ is provided which would correspond to the case of identical speakers for the preceding and the current utterances.

Now, a maximum a posteriori method (MAP) (see D. Reynolds et al., " Speaker Verification Using Adapted Gaussian Mixture Models", Digital Signal Processing 10; 19-41, 2000) is used to adapt the UBM to the segment of the current utterance, to the segment of the preceding utterance and to the unification of these two segments.

In the following, the MAP method will be described in a general way. In a first step, an a posteriori probability $p(i|\mathbf{x},\lambda)$ is determined. It corresponds to a probability that a feature vector $\mathbf{x}$ has been generated at time $t$ by cluster $i$ having the knowledge of the parameter $\lambda$ of the GMM.

In a next step, the relative frequency $\hat{w}$ of the feature vectors in this cluster are determined as well as their mean $\hat{\mu}$ and covariance $\hat{\Sigma}$. These values will be used later for updating the GMM parameters. $n_i$ denotes the absolute number of vectors being assigned to cluster $i$ in this way. In the following, only the weights and mean vectors of the GMM are adapted; in this way, problems occurring when estimating the covariance matrices are avoided.

$$p(i|\mathbf{x}_t,\lambda) = \frac{w_i \cdot N\{\mathbf{x}_t|\mu_i,\Sigma_i\}}{\sum_{i=1}^{M} w_i \cdot N\{\mathbf{x}_t|\mu_i,\Sigma_i\}}$$

$$n_i = \sum_{t=1}^{T} p(i|\mathbf{x}_t,\lambda)$$

$$\hat{w}_i = \frac{n_i}{T}$$

$$\hat{\mu}_i = \frac{1}{n_i} \sum_{t=1}^{T} p(i|\mathbf{x}_t,\lambda) \cdot \mathbf{x}_t$$

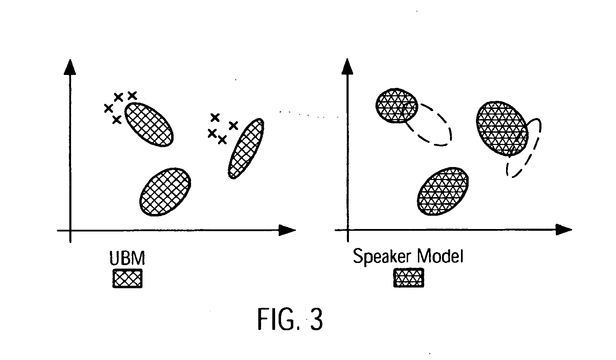

In Fig. 3, an example for such an adaption is schematically illustrated. On the left-hand side, the clusters of the UBM are illustrated as well as some feature vectors (corresponding to the crosses). After the adaption, the adapted or modified GMM shows the clusters as illustrated in the right-hand part of this Figure.

The new GMM parameters $\overline{\mu}$ and $\overline{w}$ are determined as a combination of the previous GMM parameters $\mu$ and $w$ and the updates $\hat{\mu}$ and $\hat{w}$. After having determined the updates $\hat{w}$ and $\hat{\mu}$, a weighted averaging is performed using the previous values. The previous values are weighted with a factor 1-$\alpha$, and the updates with the factor $\alpha$ itself.

$$\alpha_i = \frac{n_i}{n_i + const.}$$

$$\overline{\mu}_i = \mu_i \cdot (1-\alpha_i) + \hat{\mu}_i \cdot \alpha_i$$

$$\overline{w}_i = \frac{w_i(1-\alpha_i)+\hat{w}_i \cdot \alpha_i}{\sum_{i=1}^{M}(w_i \cdot (1-\alpha_i) + \hat{w}_i \cdot \alpha_i)}$$

By the factor $\alpha$, a weighting over the number of "softly" assigned feature vectors is obtained so that the adaption step is proportional to the number of assigned vectors. Clusters with a small number of adaption data are adapted slower than clusters for which a large number of vectors was available. The factor $\alpha$ need not be the same for the weights and means in the same cluster. The sum of the weights must be equal to 1.

Now, using a Bayesian Information Criterion (BIC), this adaption is performed on the UBM for the current speech segment, the previous speech segment (as buffered) and the unified segment containing both. Based on the resulting a posteriori probabilities, likelihood functions are determined for the hypotheses $H_0$ (no speaker change) and $H_1$ (speaker change):

$$L_0 = \frac{1}{M_x + M_y}\left(\sum_{i=1}^{M_x}\log(p(\mathbf{x}_i|\lambda_z)) + \sum_{i=1}^{M_y}\log(p(\mathbf{y}_i|\lambda_z))\right)$$

$$L_1 = \frac{1}{M_x + M_y}\left(\sum_{i=1}^{M_x}\log(p(\mathbf{x}_i|\lambda_x)) + \sum_{i=1}^{M_y}\log(p(\mathbf{y}_i|\lambda_y))\right)$$

A difference of the likelihood functions $L_0$ - $L_1$ may be used as a parameter for determining whether a speaker change has occurred or not. In view of this, the likelihood functions and/or the difference are provided to the control component 102.

Instead of the above-described likelihood comparison, other methods may be used as well to provide a parameter serving as a basis for deciding on whether a speaker change has occurred. For example, the Kullback-Leibler distance (see M. Siegler et al., "Automatic Segmentation, Classification and Clustering of Broadcast News", Proceedings DARPA Speech Recognition Workshop, 1997) or a Hotelling distance (see R Huang et al., "Advances in Unsupervised Audio Segmentation for the Broadcast News and NGSW Corpora", ICASP 2004) may be used to determine distances between the resulting probability distributions.

In a further step 204, a speaker identification is performed in speaker identification component 105.

For this purpose, the segment of the current received utterance is used to determine likelihood functions with respect to each speaker model being present in the speaker model set. At the beginning of the method, the speaker model set will only contain the UBM. After some time, however, additional speaker models have been created and are used for comparison with the current utterance. The method searches for the speaker model with index k representing the current utterance best according to the likelihood functions. The index $j$ corresponds to the different speaker models, so that the best matching speaker model may be given by

$$k = \arg\max_j\left\{\frac{1}{N}\sum\log(p(\mathbf{x}_i|\lambda_j))\right\}$$

In order to determine whether the received utterance actually corresponds to a speaker model of the speaker model set, a comparison of the likelihood for the $k$-th speaker and a predetermined threshold could be performed. If the likelihood is below this threshold, it may assumed that the current utterance does not belong to any of the existing speaker models.

However, in the present example, the current speaker is not recognized by simply comparing the likelihood functions as indicated above. Instead, the different likelihood functions are also provided from speaker identification component 105 to control component 102 for further processing. These likelihood functions are used, together with the likelihood functions resulting from the speaker change component 104, as additional parameters. Furthermore, information about the training status of the speaker-dependent models such as the distance between the speaker models, pitch, SNR and external information (e.g. direction of arrival of the incoming speech signals measured by an optional beamformer) may be integrated. These different parameters and optionally their time history are then used to decide on whether the utterance stems from a known speaker or from an unknown speaker. For this purpose, for example, the control component may comprise a neural network. Then, the likelihoods are fed to this neural network to perform the speaker recognition based on these input variables.

According to a further step 205, a speaker adaption is performed in speaker adaption component 106. If a presence of a known speaker has been determined in control component 102, the identified existing speaker model in the speaker model set is adapted using the above-described maximum a posteriori method. However, if no match has been detected, a new speaker model is created by performing the MAP method on the speaker-independent universal background model. The adaption step size given by the factor $\alpha$ above, may be controlled depending on the reliability of the speaker recognition as determined by control component 102. In particular, the step size may be reduced if the reliability is considered to be low.

The number of speaker models in the speaker model set may be limited. If the maximum number of speaker models is reached and a new speaker model is to be created, an existing speaker model in the speaker model set may be selected which had not been adapted for a predetermined time or which had not been adapted for the longest time.

Optionally, a model fusion step 206 may be performed in model fusion component 107. In this step, the distance between two speaker models are determined to identify two speaker models belonging to a same speaker. In this way, duplicate models may be recognized. On the other hand, this also allows to determine whether an adaption of a speaker-dependent speaker model (if an utterance has been determined as corresponding to a known speaker) is erroneous. For this purpose, the distance between a speaker model before and after such an adapting step may be determined. This distance may then be used as a further parameter in the speaker recognition method.

Such a distance may be determined in different ways. According to one example, a Kullback-Leibler entropy may be determined, for example, using a Monte Carlo simulation (see J. Hershey et al., "Approximating the Kullback Leibler Divergence between Gaussian Mixture Models", ICASSP 2007). For two models with the parameters $\lambda_1$ and $\lambda_2$, this entropy is determined for a set of feature vectors $\mathbf{y}_t$, $t = 1,..., T$ as

$$KL(\lambda_1 \| \lambda_2) = E\left\{ p(\mathbf{y}_t | \lambda_1) \cdot \log\left[ \frac{p(\mathbf{y}_t | \lambda_1)}{p(\mathbf{y}_t | \lambda_2)} \right] \right\}$$

The expectation value $E\{\cdot\}$ may be approximated by a Monte Carlo simulation.

Alternatively, a symmetrical Kullback-Leibler entropy $KL(\lambda_1 \| \lambda_2) + KL(\lambda_2 \| \lambda_1)$ may be used as a measure for the separability of the models.

Alternatively, the cross-correlation of the models may be used. In this case, a predetermined number of feature vectors $\mathbf{x}_t$, $t = 1,...T$ is created randomly from two GMMs with parameters $\lambda_1$ and $\lambda_2$ Then, the likelihood functions of both GMMs are determined, and the following correlation coefficient is calculated:

$$\rho_{1,2} = \frac{\sum_{t=1}^{T} p(\mathbf{x}_t | \lambda_1) \cdot p(\mathbf{x}_t | \lambda_2)}{\sqrt{(\sum_{t=1}^{T} p^2(\mathbf{x}_t | \lambda_1)) \cdot (\sum_{t=1}^{T} p^2(\mathbf{x}_t | \lambda_2))}}$$

Irrespective of which kind of distance is determined, these distances (preferably after some normalization) are passed to the control component 102. The control component 102, then, determines whether two models are to be fused. If this is the case, a fusion of the weights and means as in the case of the MAP method, may be performed:

$$\alpha_i = \frac{n_{i,\lambda_2}}{n_{i,\lambda_2} + n_{i,\lambda_1}}$$

$$\overline{\mu}_i = \mu_{i,\lambda_1} \cdot (1 - \alpha_i) + \mu_{i,\lambda_2} \cdot \alpha_i$$

$$\overline{w}_i = \frac{w_{i,\lambda_1} \cdot (1 - \alpha_i) + w_{i,\lambda_2} \cdot \alpha_i}{\sum_{i=1}^{M} (w_{i,\lambda_1} \cdot (1 - \alpha_i) + w_{i,\lambda_2} \cdot \alpha_i)}$$

The covariance matrices need not be fused as only the weights and mean vectors are adapted in the MAP algorithm. $n_{i\lambda_1}$ may be the number of all feature vectors which have been used for adaption of the cluster $i$ since creation of model $\lambda_1$, $n_{i\lambda_2}$ may be selected accordingly.

In addition to a fusion of two models, this distance determination may also be used by control component 102 as an additional parameter for determining whether a new speaker model is to be created or not.

A further parameter may be obtained by modeling the background noise in background model component 108. An elaborate system for speech segmentation in parts of desired foreground and unwanted background speech taking into account background noise is known from W. Tsai et al., "Automatic Singer Identification of Popular Music Recordings via Estimation and Modeling of Solo Vocal Signal", EUROSPEECH-2003, 2993-2996. In the invention, the idea of modelling background speech is applied for confidence measures reflecting the reliability of a decision based on noise distorted utterances.

A speaker model $\lambda_1 = \{\mathbf{w}, \mu, \Sigma\}$ is extended by a background model $\lambda_2 = \{\widetilde{\mathbf{w}}, \widetilde{\mu}, \widetilde{\Sigma}\}$ to a total model

$$\lambda = \left\{ \begin{pmatrix} \mathbf{w} \\ \widetilde{\mathbf{w}} \end{pmatrix}, (\mu \; \widetilde{\mu}), (\Sigma \; \widetilde{\Sigma}) \right\}.$$

$w$, $\widetilde{w}$ are vectors consisting of the weights of the speaker dependent and background noise models whereas $\mu, \widetilde{\mu}$ and $\Sigma$, $\widetilde{\Sigma}$ represent the mean vectors and covariance matrices. Instead of one speaker-dependent model $\lambda_1$, a group of speaker-dependent models or the speaker-independent model $\lambda_{UBM}$ can be extended by the background noise model.

Then, the a posteriori probability of the total GMM applied only to the clusters of GMM $\lambda_1$, will have the form

$$p(i|\mathbf{x}_t, \lambda) = \frac{w_i \cdot N\{\mathbf{x}_t | \mu_i, \Sigma_i\}}{\sum_{i=1}^{M} w_i \cdot N\{\mathbf{x}_t | \mu_i, \Sigma_i\} + \sum_{j=1}^{P} \widetilde{w}_j \cdot N\{\mathbf{x}_t | \widetilde{\mu}_j, \widetilde{\Sigma}_j\}}$$

Therefore, the a posteriori probability of GMM $\lambda_1$ is reduced due to the uncertainty of the given feature vector with respect to the classification into speaker or background noise. This results in a further parameter of the speaker adaptation control.

However, only the parameters of the speaker $\lambda_1$ are adapted as outlined above. After the adaptation, the total model may be split into the models $\lambda_1$ and $\lambda_2$ again. Of course, the weights of the models $\lambda$, $\lambda_1$ and $\lambda_2$ are also to be normalized so as to sum up to 1.

It is also possible to perform an adaptation of the background noise model by applying the above-described method to model $\lambda_2$ By introducing a threshold for the a posteriori probability of the background noise cluster (as a threshold for which determining whether a vector is used for adaption with a weight not being equal to zero), an adjustment of both models may be avoided. Such a threshold is justified by the fact that a much larger number of feature vectors is present for the background noise model compared to the speaker-dependent models. Thus, a slower adaption of the background noise model may be desirable.

Thus, the method allows to determine a plurality of parameters or variables which may be used as criteria to decide whether a received utterance corresponds to a speaker model already being present in the speaker model set or not. For this purpose, the control component 102 receives input data from different components such as signal-to-noise ratio, pitch, direction information, length of an utterance and difference in time between utterances from a possible acoustic pre-processing component, similarity of two utterances from the speaker change recognition component, likelihood values of known speakers and of the UBM from the speaker identification component, distances between speaker models, estimated a priori probabilities for the known speakers, a posteriori probabilities that a feature vector stems from the background noise model.

Furthermore, external information like a system restart, current path in a speech dialog, feedback from other human-machine interactions (such as multimedia applications) or technical devices (such as keys in an automotive environment, mobile phones or other electronic devices assigned to a specific user) may be integrated.

Based on some or all of these input data, the control component provides one or more of a decision whether a speaker change is present (e.g. by fusing the results from the speaker change recognition and the speaker identification), identification of a known speaker (in-set speaker), decision whether an unknown speaker (out-of-set speaker) is present, identification of models belonging to a same speaker, avoiding of adaptations to a wrong known speaker model, evaluating the reliability of specific feature vectors with respect to belonging to a speaker or the background noise, determining the reliability of the decision in favour of a speaker adaption, estimating a priori probability of the speaker, adjusting decision thresholds, and/or taking into account decisions and/or input variables from the past.

These different decisions and determinations may be obtained in several ways. For example, different parameters (such as likelihoods) received from a different component may be combined in a predetermined way, for example, using predefined weights. Alternatively, a neural network may be provided to which these parameters are passed and which outputs the corresponding decisions and determinations. Such a neural network might then be adapted permanently.

Instead of using only one speaker independent model (UBM), a set or pool of models may be provided in advance. However, these models could be derived from a single UBM so that the different clusters may still be compared.

The original UBM may be adapted once to types or classes of speakers specified in advance so that unknown speakers may be assigned to a previously adapted UBM if the speaker falls in one of these speaker classes. Possible speaker classes may be male and female speakers. In such a case, a speaker entering the system may be adapted faster as the starting model is already adapted in some regard.

In the case of usage of the system in a vehicular cabin, different vehicle types may be used to pre-adapt the UBM.

The invention uses a speaker-independent model which is customized by short utterances of a new speaker without high storage requirements and without a high computation load. This system offers a solution to the problem of unreliable decisions of the detection process due to sparse speech samples during runtime. By fusing all accessible soft decisions from several stages in the detection process and by investigating the speaker model separability and the corresponding time history, the system is able to detect and to correct false decisions. Therefore an incremental learning starting from a speaker-independent model is achieved which is not restricted to wait until enough training data is collected and which enables a preliminary speaker identification after each utterance independent of being known to the system.

It is to be understood that the different steps and components described above may also be combined in a different way and need not always be present altogether. In particular, the embodiments described above are to be construed as being illustrative only.

**Claims**

1. Method for automatic speaker recognition based on a received speech input, wherein a speaker model set comprising at least a speaker-independent speaker model is provided, comprising the steps:

   detecting whether the received speech input matches a speaker model of the speaker model set according to a predetermined criterion; and
   if no match is detected, creating a speaker model for the speaker model set based on the received speech input,

   wherein the detecting step comprises performing a speaker change recognition to obtain a measure for a speaker change, and wherein the predetermined criterion is based on the speaker change measure.

2. Method according to claim 1, wherein the detecting step additionally comprises determining a measure for a speaker identification with respect to the speaker models in the speaker model set, and wherein the predetermined criterion is additionally based on the speaker identification measure.

3. Method according to one of the preceding claims, wherein each speaker model is a Gaussian mixture model.

4. Method according to one of the preceding claims, wherein the detecting step additionally comprises determining a Likelihood function.

5. Method according to one of the preceding claims, wherein the detecting step is based on a Bayesian Information Criterion.

6. Method according to one of the preceding claims, wherein the speaker-independent model is a Universal Background Model.

7. Method according to one of the preceding claims, wherein the creating step comprises adapting the speaker-independent model to create the speaker model.

8. Method according to claim 7, wherein the adapting step comprises performing a Maximum A Posteriori method.

9. Method according to one of the preceding claims, comprising adapting a speaker model in the speaker model set, if a match is detected.

10. Method according to one of the claims 7 to 9, comprising comparing a speaker model in the speaker model set before and after the adapting step according to a predetermined criterion.

11. Method according to one of the preceding claims, comprising determining whether two speaker models in the speaker model set correspond to a same speaker according to a predetermined criterion.

12. Method according to one of the preceding claims, wherein the detecting step is supported by a background noise model.

13. Method according to one of the preceding claims, wherein the maximum number of speaker models in the speaker model set is limited.

14. Method for automatically recognizing a received speech input, comprising:

performing the method for speaker recognition according to one of the preceding claims; and
performing speech recognition based on the recognized speaker.

15. Computer program product comprising at least one computer readable medium having computer-executable instructions for performing the steps of the method of one of the preceding claims when run on a computer.

16. Apparatus for automatic speaker recognition based on a received speech input, wherein a speaker model set comprising at least a speaker model being speaker-independent is provided, comprising :

a detecting component for detecting whether the received speech input matches a speaker model of the speaker model set according to a predetermined criterion; and
a creating component for creating a speaker model for the speaker model set based on the received speech input if no match is detected wherein the detecting component comprises a speaker change recognition component for performing a speaker change recognition to obtain a measure for a speaker change, and wherein the predetermined criterion is based on the speaker change measure.

17. Apparatus according to claim 16, wherein the detecting component additionally comprises a control component configured to control the detecting step based on received input data.

18. Apparatus according to claim 16 or 17 wherein the detecting component additionally comprises a speaker identification component for determining a measure for a speaker identification with respect to a speaker model in the speaker model set, and wherein the predetermined criterion is additionally based on the speaker identification measure.

19. System for automatically recognizing a received speech input, comprising:

an apparatus for speaker recognition according to one of the claims 16-18; and
a speech recognition apparatus for performing speech recognition based on the identified speaker.

**Patentansprüche**

1. Verfahren zur automatischen Sprechererkennung auf Grundlage einer empfangenen Spracheingabe, wobei ein Sprechermodellsatz, der wenigstens ein sprecherunabhängiges Sprechermodell umfasst, bereitgestellt ist, umfassend die Schritte:

Erfassen, ob die empfangene Spracheingabe zu einem Sprechermodell des Sprechermodellsatzes passt, entsprechend einem vorbestimmten Kriterium; und
wenn kein Treffer erfasst wird, Erstellen eines Sprechermodells für den Sprechermodellsatz auf Grundlage der empfangenen Spracheingabe,

wobei der Erfassungsschritt ein Durchführen einer Sprecherwechselerkennung zur Ermittlung eines Maßes für einen Sprecherwechsel umfasst und wobei das vorbestimmte Kriterium auf dem Sprecherwechselmaß beruht.

2. Verfahren nach Anspruch 1, wobei der Erfassungsschritt zusätzlich ein Bestimmen eines Maßes für eine Sprecheridentifikation in Bezug auf die Sprechermodelle in dem Sprechermodellsatz umfasst und wobei das vorbestimmte Kriterium zusätzlich auf dem Sprecheridentifikationsmaß beruht.

3. Verfahren nach einem der vorhergehenden Ansprüche, wobei jedes Sprechermodell ein Gauß'sches Mischungsmodell ist.

4. Verfahren nach einem der vorhergehenden Ansprüche, wobei der Erfassungsschritt zusätzlich ein Bestimmen einer Likelihood-Funktion umfasst.

**5.** Verfahren nach einem der vorhergehenden Ansprüche, wobei der Erfassungsschritt auf einem Bayes'schen Informationskriterium beruht.

**6.** Verfahren nach einem der vorhergehenden Ansprüche, wobei das sprecherunabhängige Modell ein universelles Hintergrundmodell ist.

**7.** Verfahren nach einem der vorhergehenden Ansprüche, wobei der Erstellschritt ein Anpassen des sprecherunabhängigen Modells zur Erstellung des Sprechermodells umfasst.

**8.** Verfahren nach Anspruch 7, wobei der Anpassschritt ein Durchführen eines Maximum-A-Posteriori-Verfahrens umfasst.

**9.** Verfahren nach einem der vorhergehenden Ansprüche, umfassend ein Anpassen eines Sprechermodells in dem Sprechermodellsatz, wenn ein Treffer erfasst wird.

**10.** Verfahren nach einem der Ansprüche 7 bis 9, umfassend ein Vergleichen eines Sprechermodells in dem Sprechermodellsatz vor und nach dem Anpassschritt entsprechend einem vorbestimmten Kriterium.

**11.** Verfahren nach einem der vorhergehenden Ansprüche, umfassend ein Bestimmen, ob zwei Sprechermodelle in dem Sprechermodellsatz ein und demselben Sprecher entsprechen, entsprechend einem vorbestimmten Kriterium.

**12.** Verfahren nach einem der vorhergehenden Ansprüche, wobei der Erfassungsschritt von einem Hintergrundrauschmodell unterstützt wird.

**13.** Verfahren nach einem der vorhergehenden Ansprüche, wobei die maximale Anzahl von Sprechermodellen in dem Sprechermodellsatz begrenzt ist.

**14.** Verfahren zum automatischen Erkennen einer empfangenen Spracheingabe, umfassend:

Durchführen des Verfahrens zur Sprechererkennung entsprechend einem der vorhergehenden Ansprüche; und Durchführen einer Spracherkennung auf Grundlage des erkannten Sprechers.

**15.** Computerprogrammerzeugnis, umfassend wenigstens ein computerlesbares Medium mit computerausführbaren Anweisungen zum Durchführen der Schritte des Verfahrens nach einem der vorhergehenden Ansprüche bei Einsatz auf einem Computer.

**16.** Vorrichtung zur automatischen Sprechererkennung auf Grundlage einer empfangenen Spracheingabe, wobei ein Sprechermodellsatz, der wenigstens ein sprecherunabhängiges Sprechermodell umfasst, bereitgestellt ist, umfassend:

eine Erfassungskomponente zum Erfassen, ob die empfangene Spracheingabe zu einem Sprechermodell des Sprechermodellsatzes passt, entsprechend einem vorbestimmten Kriterium; und eine Erstellkomponente zum Erstellen eines Sprechermodells für den Sprechermodellsatz auf Grundlage der empfangenen Spracheingabe, wenn kein Treffer erfasst wird,

wobei die Erfassungskomponente eine Sprecherwechselerkennungskomponente zum Durchführen einer Sprecherwechselerkennung zur Ermittlung eines Maßes für einen Sprecherwechsel umfasst und wobei das vorbestimmte Kriterium auf dem Sprecherwechselmaß beruht.

**17.** Vorrichtung nach Anspruch 16, wobei die Erfassungskomponente zusätzlich eine Steuerkomponente umfasst, die dafür ausgelegt ist, den Erfassungsschritt auf Grundlage empfangener Eingabedaten zu steuern.

**18.** Vorrichtung nach Anspruch 16 oder 17, wobei die Erfassungskomponente zusätzlich eine Sprecheridentifikationskomponente zum Bestimmen eines Maßes für eine Sprecheridentifikation in Bezug auf ein Sprechermodell in dem Sprechermodellsatz umfasst und wobei das vorbestimmte Kriterium zusätzlich auf dem Sprecheridentifikationsmaß beruht.

**19.** System zum automatischen Erkennen einer empfangenen Spracheingabe, umfassend:

eine Vorrichtung zur Sprechererkennung nach einem der Ansprüche 16 bis 18; und
eine Spracherkennungsvorrichtung zum Durchführen einer Spracherkennung auf Grundlage des identifizierten Sprechers.

**Revendications**

1. Procédé de reconnaissance automatique d'un locuteur sur la base d'une entrée vocale reçue, dans lequel est fourni un ensemble de modèles de locuteurs, comprenant au moins un modèle de locuteur indépendant du locuteur, comprenant les étapes suivantes :

   la détection de ce que l'entrée vocale reçue correspond à un modèle de locuteur faisant partie de l'ensemble de modèles de locuteurs en fonction d'un critère prédéterminé, et
   si aucune correspondance n'est détectée, la création, fondée sur l'entrée vocale reçue, d'un modèle de locuteur pour l'ensemble de modèles de locuteurs,

   dans lequel l'étape de détection comprend l'exécution d'une reconnaissance de changement de locuteur afin d'obtenir une mesure pour un changement de locuteur, et dans lequel le critère prédéterminé est fondé sur la mesure du changement de locuteur.

2. Procédé selon la revendication 1, dans lequel l'étape de détection comprend de plus la détermination d'une mesure pour l'identification du locuteur par rapport aux modèles de locuteurs se trouvant dans l'ensemble de modèles de locuteurs, et dans lequel le critère prédéterminé est de plus fondé sur la mesure d'identification du locuteur.

3. Procédé selon l'une des revendications précédentes, dans lequel chaque modèle de locuteur est un modèle de mélange de Gaussiennes (GMM).

4. Procédé selon l'une des revendications précédentes, dans lequel l'étape de détection comprend de plus la détermination d'une fonction de probabilité.

5. Procédé selon l'une des revendications précédentes, dans lequel l'étape de détection est fondée sur un critère Bayésien d'informations.

6. Procédé selon l'une des revendications précédentes, dans lequel le modèle indépendant du locuteur est un modèle du monde universel(UBM).

7. Procédé selon l'une des revendications précédentes, dans lequel l'étape de création comprend l'adaptation du modèle indépendant du locuteur afin de créer le modèle du locuteur.

8. Procédé selon la revendication 7, dans lequel l'étape d'adaptation comprend l'exécution d'un procédé de maximum à posteriori.

9. Procédé selon l'une des revendications précédentes, comprenant l'adaptation d'un modèle de locuteur dans l'ensemble de modèles de locuteurs si une correspondance est détectée.

10. Procédé selon l'une des revendications 7 à 9, comprenant la comparaison d'un modèle de locuteur dans l'ensemble de modèles de locuteurs avant et après l'étape d'adaptation conformément à un critère prédéterminé.

11. Procédé selon l'une des revendications précédentes, comprenant la détermination de ce que deux modèles de locuteurs se trouvant dans l'ensemble de modèles de locuteurs correspondent à un même locuteur conformément à un critère prédéterminé.

12. Procédé selon l'une des revendications précédentes, dans lequel l'étape de détection est prise en charge par un modèle de bruit de fond.

13. Procédé selon l'une quelconque des revendications précédentes, dans lequel le nombre maximal de modèles de locuteurs dans l'ensemble de modèles de locuteurs est limité.

**14.** Procédé de reconnaissance automatique d'une entrée vocale reçue, comprenant :

l'exécution du procédé de reconnaissance de locuteur selon l'une des revendications précédentes, et
l'exécution de la reconnaissance vocale fondée sur le locuteur reconnu.

**15.** Produit de programme informatique comprenant au moins un support pouvant être lu par ordinateur comportant des instructions exécutables par ordinateur permettant d'effectuer les étapes du procédé de l'une des revendications précédentes lorsqu'il est exécuté sur un ordinateur.

**16.** Appareil de reconnaissance automatique de locuteur fondé sur une entrée vocale reçue, dans lequel est fourni un ensemble de modèles de locuteurs comprenant au moins un modèle de locuteur indépendant du locuteur et comprenant :

un composant de détection permettant de détecter si l'entrée vocale reçue correspond à un modèle de locuteur faisant partie de l'ensemble de modèles de locuteurs en fonction d'un critère prédéterminé, et
un composant de création permettant de créer un modèle de locuteur pour l'ensemble de modèles de locuteurs sur la base de l'entrée vocale reçue si aucune correspondance n'est détectée,

dans lequel le composant de détection comprend un composant de reconnaissance de changement de locuteur permettant d'effectuer une reconnaissance de changement de locuteur afin d'obtenir une mesure pour un changement de locuteur, et dans lequel le critère prédéterminé est fondé sur la mesure de changement de locuteur.

**17.** Appareil selon la revendication 16, dans lequel le composant de détection comprend de plus un composant de commande configuré pour commander l'étape de détection fondée sur les données reçues en entrée.

**18.** Appareil selon la revendication 16 ou 17, dans lequel le composant de détection comprend en outre un composant d'identification de locuteur permettant de déterminer une mesure pour l'identification d'un locuteur par rapport à un modèle de locuteur se trouvant dans l'ensemble de modèles de locuteurs, et
dans lequel le critère prédéterminé est de plus fondé sur la mesure d'identification du locuteur.

**19.** Système de reconnaissance automatique d'une entrée vocale reçue, comprenant :

un appareil permettant la reconnaissance d'un locuteur en fonction de l'une des revendications 16 à 18, et
un appareil de reconnaissance de locuteur permettant d'effectuer une reconnaissance vocale fondée sur le locuteur identifié.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02090915 A

### Non-patent literature cited in the description

- **Kwon S et al.** Unsupervised Speaker Indexing Using Generic Models. *IEEE Trans. on Speech and Audio Proc.,* 05 September 2005, vol. 13, 1004-1013
- **L. Rabiner et al.** Fundamentals of Speech Recognition. *Prentice Hall,* 1993
- **J. AJMERA et al.** Robust Speaker Change Detection. *IEEE Signal Processing Letters,* 2004, vol. 11 (8
- **F. BIMBOT et al.** Text-Free Speaker Recognition Using An Arithmetic-Harmonic Sphericity Measure. *3rd European Conference on Speech and Technology,* 1993
- **V. KARTIK et al.** Speaker Change Detection Using Support Vector Machines. *NOLISP,* 2005
- **D. REYNOLDS et al.** Robust Text-Independent Speaker Identification Using Gaussian Mixture Speaker Models. *IEEE Transactions on Speech and Audio Processing,* 1995, vol. 3 (1
- **D. REYNOLDS et al.** Speaker Verification Using Adapted Gaussian Mixture Models. *Digital Signal Processing,* 2000, vol. 10, 19-41
- **M. SIEGLER et al.** Automatic Segmentation, Classification and Clustering of Broadcast News. *Proceedings DARPA Speech Recognition Workshop,* 1997
- **R HUANG et al.** Advances in Unsupervised Audio Segmentation for the Broadcast News and NGSW Corpora. *ICASP,* 2004
- **J. HERSHEY et al.** Approximating the Kullback Leibler Divergence between Gaussian Mixture Models. *ICASSP,* 2007
- **W. TSAI et al.** Automatic Singer Identification of Popular Music Recordings via Estimation and Modeling of Solo Vocal Signal. *EUROSPEECH,* 2003, 2993-2996